# EUROPÄISCHE PATENTSCHRIFT

(11) **EP 2 870 682 B1**
(45) Veröffentlichungstag und Bekanntmachung des Hinweises auf die Patenterteilung: **02.11.2016**
(21) Anmeldenummer: 13756346.6
(22) Anmeldetag: 20.08.2013
(51) Int. Cl.: H02K 1/27, H02K 1/28, H02K 1/32, H02K 7/04, H02K 9/06

(54) **ROTOR EINER ELEKTRISCHEN MASCHINE UND ELEKTRISCHE MASCHINE**
ROTOR OF AN ELECTRIC MACHINE, AND ELECTRIC MACHINE
ROTOR D'UN MOTEUR ÉLECTRIQUE ET MOTEUR ÉLECTRIQUE

(30) Priorität: 28.08.2012 DE 102012215236
(43) Veröffentlichungstag der Anmeldung: 13.05.2015
(73) Patentinhaber: Siemens Aktiengesellschaft, 80333 München (DE)
(72) Erfinder: LANGE, Thomas, 90766 Fürth (DE)
(86) Internationale Anmeldenummer: PCT/EP2013/067318
(87) Internationale Veröffentlichungsnummer: WO 2014/033015

(56) Entgegenhaltungen:
- EP-A1- 2 416 472
- EP-B1- 0 909 004
- WO-A1-02/054566
- DE-A1-102007 039 186
- US-A1- 2011 074 242

## Beschreibung

Die vorliegende Erfindung betrifft einen Rotor einer elektrischen Maschine,
- wobei der Rotor ein drehfest mit einer Rotorwelle des Rotors verbundenes Rotorblechpaket aufweist,
- wobei das Rotorblechpaket sich in Richtung einer Rotationsachse des Rotorblechpakets gesehen von einer ersten axialen Stirnseite des Rotorblechpakets zu einer zweiten axialen Stirnseite des Rotorblechpakets erstreckt,
- wobei das Rotorblechpaket um die Rotationsachse herum verteilt Ausnehmungen aufweist, die sich in Richtung der Rotationsachse gesehen von der ersten axialen Stirnseite zur zweiten axialen Stirnseite erstrecken,
- wobei in die Ausnehmungen jeweils ein Zuganker eingeführt ist, der in Richtung der Rotationsachse gesehen über die axialen Stirnseiten hinausragt,
- wobei auf die Zuganker an beiden axialen Stirnseiten Befestigungselemente aufgesetzt sind.

Die vorliegende Erfindung betrifft weiterhin eine elektrische Maschine,
- wobei die elektrische Maschine einen Stator und einen Rotor aufweist,
- wobei der Rotor in Lagern gelagert ist, so dass er um eine Rotationsachse des Rotors rotierbar ist.

Ein derartiger Rotor und eine derartige elektrische Maschine sind beispielsweise aus der EP 0 909 004 B1 bekannt.

Aus der US 2011/0 074 242 A1 ist ebenfalls ein Rotor einer elektrischen Maschine bekannt, der ein Rotorblechpaket aufweist. Das Rotorblechpaket erstreckt sich in Richtung einer Rotationsachse des Rotorblechpakets gesehen von einer ersten axialen Stirnseite des Rotorblechpakets zu einer zweiten axialen Stirnseite des Rotorblechpakets. Um die Rotationsachse herum verteilt weist das Rotorblechpaket Ausnehmungen auf, die sich in Richtung der Rotationsachse gesehen von der ersten axialen Stirnseite zur zweiten axialen Stirnseite erstrecken. In die Ausnehmungen ist jeweils ein Zuganker eingeführt, der in Richtung der Rotationsachse gesehen über die axialen Stirnseiten hinausragt. Auf die Zuganker sind Befestigungselemente aufgesetzt, mittels derer die Rotorbleche aneinander angepresst werden.

Die US 2012/0098359 A1 ist ein Rotor einer elektrischen Maschine bekannt, der ein Rotorblechpaket aufweist. Das Rotorblechpaket erstreckt sich in Richtung einer Rotationsachse des Rotorblechpakets gesehen von einer ersten axialen Stirnseite des Rotorblechpakets zu einer zweiten axialen Stirnseite des Rotorblechpakets. Um die Rotationsachse herum verteilt weist das Rotorblechpaket Ausnehmungen auf, die sich in Richtung der Rotationsachse gesehen von der ersten axialen Stirnseite zur zweiten axialen Stirnseite erstrecken. In die Ausnehmungen ist jeweils ein Niet eingeführt, der in Richtung der Rotationsachse gesehen über die axialen Stirnseiten hinausragt. Auf den Niet sind Auswuchtelemente aufgesetzt.

Im Stand der Technik wird das Rotorblechpaket auf die Rotorwelle aufgebracht. Der sogenannte Paketierdruck wird durch Läuferdruckringe aufgebracht, welche auf die beiden Stirnseiten des Rotorblechpakets aufgesetzt werden. Der Paketierdruck wird über die Läuferdruckringe auf die Rotorwelle übertragen. Der Paketierdruck bewirkt eine Durchbiegung der Läuferdruckringe. Die Läuferdruckringe müssen daher entsprechend stabil ausgestaltet sein, um eine übermäßige Durchbiegung der Läuferdruckringe vermeiden. Ein etwaiger Lüfter ist in der Regel direkt auf der Rotorwelle angeordnet.

Die Aufgabe der vorliegenden Erfindung besteht darin, eine elektrische Maschine zu schaffen, welche einfach aufgebaut ist, ohne Läuferdruckringe auskommt und bei welcher insbesondere der Lüfter auf einfache Weise mit dem Rotor verbindbar ist.

Die Aufgabe wird durch einen Rotor mit den Merkmalen des Anspruchs 1 gelöst. Vorteilhafte Ausgestaltungen des erfindungsgemäßen Rotors sind Gegenstand der abhängigen Ansprüche 2 bis 11.

Erfindungsgemäß wird die Aufgabe dadurch gelöst, dass ein Rotor der eingangs genannten Art dadurch ausgestaltet wird,
- dass die Rotorbleche des Rotorblechpakets ohne Anordnung von Läuferdruckringen zwischen den Stirnseiten des Rotorblechpakets und den Befestigungselementen mittels der Befestigungselemente aneinander gepresst werden,
- dass an der ersten axialen Stirnseite des Rotorblechpakets auf die Zuganker ein Lüfter aufgesetzt ist und
- dass an der ersten axialen Stirnseite des Rotorblechpakets die Befestigungselemente zwischen der Stirnseite und dem Lüfter angeordnet sind.

Das Rotorblechpaket besteht in aller Regel aus einer Vielzahl von Rotorblechen. In einer bevorzugten Ausgestaltung der vorliegenden Erfindung weisen die Rotorbleche an ihrer von der Rotationsachse abgewandten Seite jeweils ein Joch und an ihrer der Rotationsachse zugewandten Seite jeweils eine Blechnabe auf. In diesem Fall sind die Joche und die Blechnaben der Rotorbleche über jeweilige Blechspeichen miteinander verbunden.

Die Ausgestaltung des Lüfters kann nach Bedarf bestimmt sein. Vorzugsweise weist der Lüfter eine orthogonal zur Rotationsachse verlaufende Ringscheibe und von der Ringscheibe abstehende Lüfterflügel auf.

Die Ringscheibe kann an ihrer von der Rotationsachse abgewandten Seite einen Außenring und an ihrer der Rotationsachse zugewandten Seite eine Scheibennabe aufweisen. In diesem Fall sind die Lüfterflügel am Außenring angeordnet und sind der Außenring und die Scheibennabe über Scheibenspeichen miteinander verbunden. Diese Ausgestaltung ist insbesondere dann sinnvoll, wenn die Rotorbleche die obenstehend erwähnten Blechnaben und Blechspeichen aufweisen.

Aufgrund des Umstands, dass die Scheibennabe auf die Zuganker aufgesetzt ist, ist es möglich, dass die Scheibennabe mit der Rotorwelle nicht drehfest verbunden ist. Die Scheibennabe dient in diesem Fall lediglich als Positionier- und Zentrierhilfe für den Lüfter bei der Montage.

Vorzugsweise ist vorgesehen, dass die Lüfterflügel als Blechteile ausgebildet sind und auf die Ringscheibe aufgesteckt sind. Dadurch ergibt sich eine konstruktiv besonders einfache Gestaltung des Lüfters.

Vorzugsweise sind die Lüfterflügel von radial innen nach radial außen auf die Ringscheibe aufgesteckt. Dadurch ergibt sich eine vereinfachte Halterung der Lüfterflügel an der Ringscheibe.

Vorzugsweise sind die Lüfterflügel mit der Ringscheibe verschweißt.

In einer besonders bevorzugten Ausgestaltung weisen die Lüfterflügel axial innere Abschnitte auf, die zwischen der Ringscheibe und der ersten axialen Stirnseite angeordnet sind. In diesem Fall können insbesondere die axial inneren Abschnitte unter Druckspannung an der ersten axialen Stirnseite anliegen. Dadurch wird das Rotorblechpaket noch weiter stabilisiert.

Es ist möglich, dass auf mindestens einen der Zuganker an der ersten axialen Stirnseite mindestens ein Wuchtgewicht aufgesetzt ist. In diesem Fall kann insbesondere der Lüfter zwischen der ersten axialen Stirnseite und dem Wuchtgewicht angeordnet sein.

In einer weiteren bevorzugten Ausgestaltung sind die Zuganker in den Ausnehmungen mittels einer Vergussmasse vergossen.

In Bezug auf die elektrische Maschine wird die Aufgabe dadurch gelöst, dass bei einer elektrischen Maschine der eingangs genannten Art der Rotor wie obenstehend erläutert ausgebildet ist.

Die elektrische Maschine kann prinzipiell für beliebige Zwecke verwendet werden. Vorzugsweise wird sie als Traktionsmotor eines Fahrzeugs verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine elektrische Maschine im Längsschnitt,
- FIG 2: ein Rotorblech im Querschnitt,
- FIG 3: ein Detail von FIG 2,
- FIG 4: einen Lüfter der elektrischen Maschine von FIG 1 quer zu einer Rotationsachse gesehen und
- FIG 5: ein Fahrzeug mit einer elektrischen Maschine.

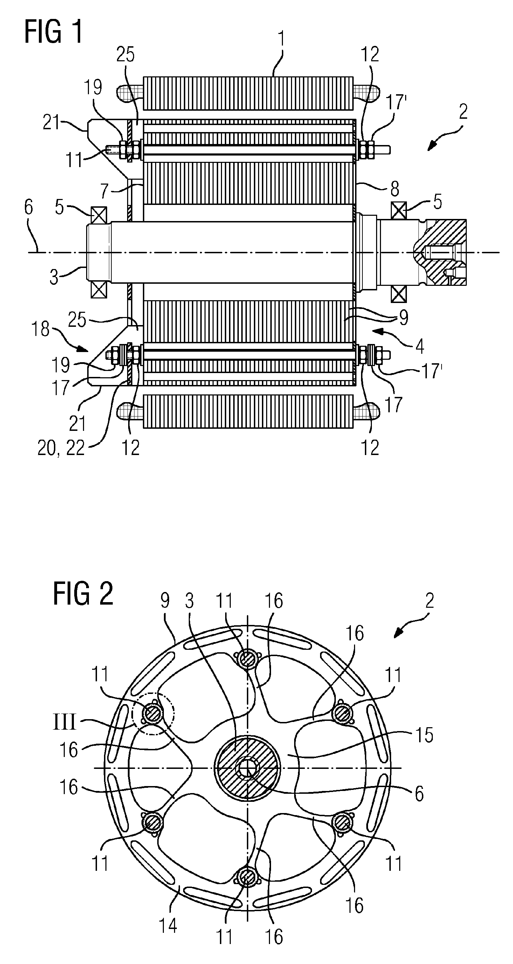

Gemäß FIG 1 weist eine elektrische Maschine einen Stator 1 und einen Rotor 2 auf. Der Rotor 2 weist eine Rotorwelle 3 und ein Rotorblechpaket 4 auf. Die Rotorwelle 3 ist in Lagern 5 gelagert, so dass die Rotorwelle 3 und mit ihr der gesamte Rotor 2 um eine Rotationsachse 6 der elektrischen Maschine rotierbar ist.

Soweit nachfolgend die Begriffe "axial", "radial" und "tangential" verwendet werden, sind sie stets auf die Rotationsachse 6 bezogen. Der Begriff "axial" bedeutet eine Richtung parallel zur Rotationsachse 6. Der Begriff "radial" bedeutet eine Richtung orthogonal zur Rotationsachse 6 auf die Rotationsachse 6 zu oder von ihr weg. Der Begriff "tangential" bedeutet eine Richtung orthogonal zur Rotationsachse 6 und orthogonal zur Radialrichtung, also in einem konstanten radialen Abstand von der Rotationsachse 6 kreisförmig um die Rotationsachse 6 herum.

In der Regel ist der Rotor 2 entsprechend der Darstellung von FIG 1 radial innerhalb des Stators 1 angeordnet. Die elektrische Maschine ist somit als Innenläufer ausgebildet. In Einzelfällen kann der Rotor 2 jedoch alternativ radial außerhalb des Stators 2 angeordnet sein. In diesem Fall ist die elektrische Maschine als Außenläufer ausgebildet.

Der Stator 1 der elektrischen Maschine ist im Rahmen der vorliegenden Erfindung von untergeordneter Bedeutung. Nachfolgend wird daher nur der Rotor 2 näher erläutert.

Gemäß FIG 1 erstreckt sich das Rotorblechpaket 4 in Axialrichtung gesehen von einer ersten axialen Stirnseite 7 des Rotorblechpakets 4 zu einer zweiten axialen Stirnseite 8 des Rotorblechpakets 4. Das Rotorblechpaket 4 besteht aus einer Vielzahl von Rotorblechen 9, die in Axialrichtung aufeinander gestapelt sind.

Gemäß den FIG 1, 2 und 3 weist das Rotorblechpaket 4 Ausnehmungen 10 auf. Die Ausnehmungen 10 sind gemäß FIG 2 um die Rotationsachse 6 herum verteilt angeordnet. Die Ausnehmungen 10 erstrecken sich in Axialrichtung durchgängig durch das Rotorblechpaket 4, also von der ersten axialen Stirnseite 7 zur zweiten axialen Stirnseite 8. In die Ausnehmungen 10 ist jeweils ein Zuganker 11 eingeführt. Die Zuganker 11 weisen eine größere Länge auf als das Rotorblechpaket 4. Die Zuganker 11 ragen somit axial über die Stirnseiten 7, 8 des Rotorblechpakets 4 hinaus.

Auf die Zuganker 11 sind an beiden axialen Stirnseiten 7, 8 Befestigungselemente 12 aufgesetzt, beispielsweise Schraubenmuttern 12. Mittels der Befestigungselemente 12 werden die Rotorbleche 9 des Rotorblechpakets 4 aneinander gepresst.

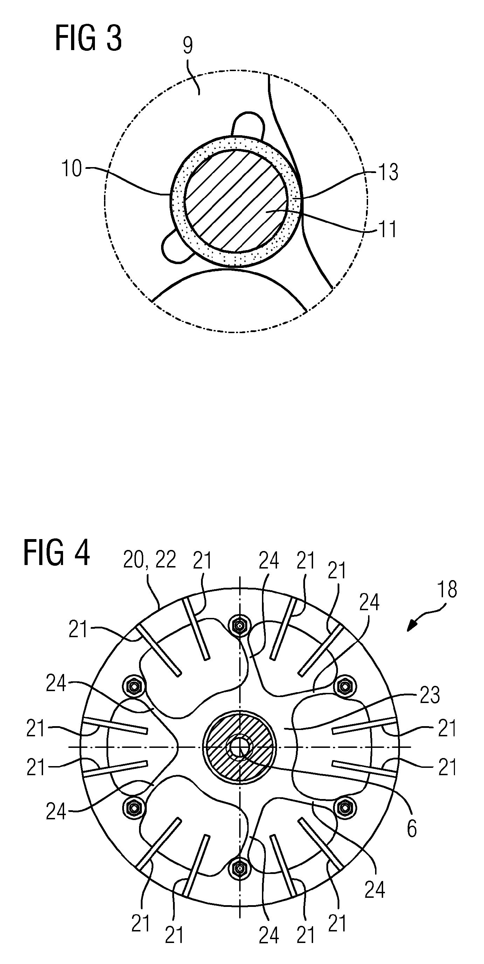

Gemäß FIG 3 weisen die Ausnehmungen 10 einen - wenn auch nur geringfügig - größeren Querschnitt auf als die Zuganker 11. Um im laufenden Betrieb der elektrischen Maschine ein Schwingen der Zuganker 11 mit Sicherheit zu vermeiden, sind vorzugsweise die Zuganker 11 in den Ausnehmungen 10 mittels einer Vergussmasse 13 vergossen. Geeignete Vergussmassen sind dem Fachmann an sich bekannt. Sie werden im Stand der Technik beispielsweise zum Vergießen von Permanentmagneten einer permanenterregten elektrischen Maschine verwendet.

Gemäß FIG 1 ist an der ersten axialen Stirnseite 7 des Rotorblechpakets 4 auf die Zuganker 11 ein Lüfter 18 aufgesetzt. Der Lüfter 18 kann entsprechend der Darstellung von FIG 1 insbesondere auf die an der ersten axialen Stirnseite 7 befindlichen Befestigungselemente 12 aufgesetzt sein. In diesem Fall sind somit die Befestigungselemente 12 zwischen der ersten Stirnseite 7 und dem Lüfter 18 angeordnet. Die Befestigung des Lüfter 18 auf den Zugankern 11 kann insbesondere mittels weiterer Befestigungselemente 19 erfolgen, beispielsweise mittels Schraubenmuttern 19.

FIG 2 zeigt nicht nur das Grundprinzip der vorliegenden Erfindung, sondern zugleich auch eine bevorzugte Ausgestaltung der Rotorbleche 9. Insbesondere weisen gemäß FIG 2 die Rotorbleche 9 an ihrer von der Rotationsachse 6 abgewandten Seite jeweils ein Joch 14 und an ihrer der Rotationsachse 6 zugewandten Seite jeweils eine Blechnabe 15 auf. Die Joche 14 und die Blechnaben 15 der Rotorbleche 9 sind über jeweilige Blechspeichen 16 miteinander verbunden. Die Verwendung des Zusatzes "Blech-" bei der Bezeichnung der Blechnaben 15 und der Blechspeichen 16 dient der sprachlichen Unterscheidung der genannten Elemente von anderen Naben und Speichen. Eine weitergehende Bedeutung kommt dem Zusatz "Blech-" in diesem Zusammenhang nicht zu.

Der Lüfter 18 kann nach Bedarf ausgebildet sein. Vorzugsweise weist der Lüfter gemäß den FIG 1 und 4 eine Ringscheibe 20 und Lüfterflügel 21 auf. Die Ringscheibe 20 verläuft orthogonal zur Rotationsachse 6. Die Lüfterflügel 21 stehen von der Ringscheibe 20 ab. Insbesondere können sie orthogonal von der Ringscheibe 20 abstehen.

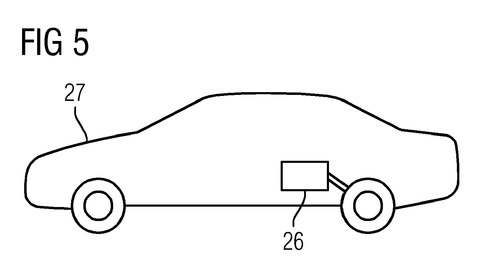

Es ist möglich, dass die Ringscheibe 20 mit einem Außenring 22 identisch ist. Der Außenring 22 ist im wesentlichen bei dem gleichen radialen Abstand angeordnet wie die Joche 14 der Rotorbleche 9. Die Lüfterflügel 21 sind am Außenring 22 angeordnet. Gemäß FIG 5 weist die Ringscheibe 20 jedoch zusätzlich zu dem Außenring 22 eine Scheibennabe 23 auf. Der Außenring 22 ist in diesem Fall an der von der Rotationsachse 6 abgewandten Seite der Ringscheibe 20 angeordnet, die Scheibennabe 23 an der der Rotationsachse 6 zugewandten Seite der Ringscheibe 20. Der Außenring 22 und die Scheibennabe 23 sind über Scheibenspeichen 24 miteinander verbunden. Die Verwendung des Zusatzes "Scheiben-" bei der Bezeichnung der Scheibennabe 23 und der Scheibenspeichen 24 dient der sprachlichen Unterscheidung der genannten Elemente von anderen Naben und Speichen. Eine weitergehende Bedeutung kommt dem Zusatz "Scheiben-" in diesem Zusammenhang nicht zu.

Falls die Ringscheibe 20 den Außenring 22, die Scheibennabe 23 und die Scheibenspeichen 24 umfasst, entspricht die Kontur der Ringscheibe 20 vorzugsweise der eines Rotorbleches 9.

Die Scheibennabe 23 kann mit der Rotorwelle 3 drehfest verbunden sein. Vorzugsweise ist die Ringscheibe 20 jedoch derart dimensioniert, dass die Scheibennabe 23 mit der Rotorwelle 3 nicht drehfest verbunden ist. Die Scheibennabe 23 dient somit lediglich als Positionier- und Zentrierhilfe bei der Montage des Lüfters 18.

In einer besonders bevorzugten Ausgestaltung sind die Lüfterflügel 21 als einfache Blechteile ausgebildet sind. Auch die Ringscheibe 20 kann als einfaches Blechteil ausgebildet sein. Die Lüfterflügel 21 können beispielsweise auf die Ringscheibe 20 aufgesteckt sein. Vorzugsweise sind die Lüfterflügel 21 von radial innen nach radial außen auf die Ringscheibe 20 aufgesteckt.

Die Lüfterflügel 21 können auf beliebige Weise mit der Ringscheibe 20 verbunden sein. Vorzugsweise sind die Lüfterflügel 21 mit der Ringscheibe 20 verschweißt.

Die Lüfterflügel 21 weisen gemäß FIG 1 axial innere Abschnitte 25 auf. Die axial inneren Abschnitte 25 der Lüfterflügel 21 sind gemäß FIG 1 zwischen der Ringscheibe 20 und der ersten axialen Stirnseite 7 angeordnet. Vorzugsweise ist die axiale Bauhöhe der axial inneren Abschnitte 25 derart bemessen, dass die axial inneren Abschnitte 25 unter Druckspannung an der ersten axialen Stirnseite 7 anliegen. Der Abstand der Ringscheibe 20 bzw. des Außenrings 22 von der ersten axialen Stirnseite 7 weist somit in Umfangsrichtung um die Rotationsachse 6 herum gesehen eine leichte Welligkeit auf, wobei die Minima im Bereich der Zuganker 11 und die Maxima im Bereich der Lüfterflügel 21 liegen.

FIG 1 zeigt ebenfalls nicht nur das Grundprinzip der vorliegenden Erfindung, sondern zugleich auch eine bevorzugte Ausgestaltung der elektrischen Maschine. Gemäß FIG 1 kann zum Beseitigen einer Unwucht auf mindestens einen der Zuganker 11 (mindestens) ein Wuchtgewicht 17 aufgesetzt sein. In der Regel sind entsprechend der Darstellung von FIG 1 zwei Wuchtgewichte 17 aufgesetzt, wobei je eines der Wuchtgewichte 17 an der ersten und der zweiten axialen Stirnseite 7, 8 auf den entsprechenden Zuganker 11 aufgesetzt ist. Bezüglich des an der zweiten axialen Stirnseite 8 aufgesetzten Wuchtgewichts 17 erfolgt dessen Befestigung mittels eines weiteren Befestigungselements 17' (beispielsweise einer Schraubenmutter 17'). Bei dem an der ersten axialen Stirnseite 7 auf den entsprechenden Zuganker 11 aufgesetzten Wuchtgewicht 17 ist vorzugsweise der Lüfter 18 zwischen der ersten axialen Stirnseite 7 und dem Wuchtgewicht 17 angeordnet.

Die erfindungsgemäße elektrische Maschine kann prinzipiell für beliebige Zwecke verwendet werden. Vorzugsweise wird die elektrische Maschine gemäß FIG 5 als Traktionsmotor 26 eines Fahrzeugs 27 verwendet. Das Fahrzeug 27 kann beispielsweise als Schienenfahrzeug oder als Straßenfahrzeug ausgebildet sein.

Die vorliegende Erfindung weist viele Vorteile auf. So können beispielsweise die Läuferdruckringe des Standes der Technik entfallen. Dies hat sowohl Kosten- als auch Gewichtsvorteile zur Folge. Auch kann die elektrische Maschine kompakter gestaltet werden als im Stand der Technik. Aufgrund der Speichenkonstruktion kann das Joch 14 hocheffizient gekühlt werden. Auch ist weniger Material zur Herstellung der elektrischen Maschine erforderlich. Im Falle des Vorhandenseins des Lüfters 18 stützen einerseits die Lüfterflügel 21 zusätzlich das Rotorblechpaket 4 und erfolgt andererseits eine zusätzliche Schwingungsdämpfung der Lüfterflügel 21. Durch die Verbindung des Lüfters 18 mit den Zugankern 11 ergeben sich nur sehr geringe Torsionsbeanspruchungen der Verbindung.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotor einer elektrischen Maschine,
- wobei der Rotor ein drehfest mit einer Rotorwelle (3) des Rotors verbundenes Rotorblechpaket (4) aufweist,
- wobei das Rotorblechpaket (4) sich in Richtung einer Rotationsachse (6) des Rotorblechpakets (4) gesehen von einer ersten axialen Stirnseite (7) des Rotorblechpakets (4) zu einer zweiten axialen Stirnseite (8) des Rotorblechpakets (4) erstreckt,
- wobei das Rotorblechpaket (4) um die Rotationsachse (6) herum verteilt Ausnehmungen (10) aufweist, die sich in Richtung der Rotationsachse (6) gesehen von der ersten axialen Stirnseite (7) zur zweiten axialen Stirnseite (8) erstrecken,
- wobei in die Ausnehmungen (10) jeweils ein Zuganker (11) eingeführt ist, der in Richtung der Rotationsachse (6) gesehen über die axialen Stirnseiten (7,8) hinausragt,
- wobei auf die Zuganker (11) an beiden axialen Stirnseiten (7, 8) Befestigungselemente (12) aufgesetzt sind, so dass die Rotorbleche (9) des Rotorblechpakets (4) ohne Anordnung von Läuferdruckringen zwischen den Stirnseiten (7, 8) des Rotorblechpakets (4) und den Befestigungselementen (12) mittels der Befestigungselemente (12) aneinander gepresst werden,
**gekennzeichnet dadurch, dass**
- an der ersten axialen Stirnseite (7) des Rotorblechpakets (4) auf die Zuganker (11) ein Lüfter (18) aufgesetzt ist,
- und an der ersten axialen Stirnseite (7) des Rotorblechpakets (4) die Befestigungselemente (12) zwischen der Stirnseite (7) und dem Lüfter (18) angeordnet sind.

2. Rotor nach Anspruch 1, **dadurch gekenn-zeichnet,** dass das Rotorblechpaket (4) aus einer Vielzahl von Rotorblechen (9) besteht, dass die Rotorbleche (9) an ihrer von der Rotationsachse (6) abgewandten Seite jeweils ein Joch (14) und an ihrer der Rotationsachse (6) zugewandten Seite jeweils eine Blechnabe (15) aufweisen und dass die Joche (14) und die Blechnaben (15) der Rotorbleche (9) über jeweilige Blechspeichen (16) miteinander verbunden sind.

3. Rotor nach Anspruch 1 oder 2, **dadurch** g e - kennzeichnet, dass der Lüfter (18) eine orthogonal zur Rotationsachse (6) verlaufende Ringscheibe (20) und von der Ringscheibe (20) abstehende Lüfterflügel (21) aufweist.

4. Rotor nach Anspruch 3, **dadurch gekenn-zeichnet,** dass die Ringscheibe (20) an ihrer von der Rotationsachse (6) abgewandten Seite einen Außenring (22) und an ihrer der Rotationsachse (6) zugewandten Seite eine Scheibennabe (23) aufweist, dass die Lüfterflügel (21) am Außenring (22) angeordnet sind und dass der Außenring (22) und die Scheibennabe (23) über Scheibenspeichen (24) miteinander verbunden sind.

5. Rotor nach Anspruch 4, **dadurch gekenn-** z e i c h n e t , dass die Scheibennabe (23) mit der Rotorwelle (3) nicht drehfest verbunden ist.

6. Rotor nach einem der Ansprüche 3, 4 oder 5, **dadurch gekennzeichnet , dass** die Lüfterflügel (21) als Blechteile ausgebildet sind und auf die Ringscheibe (20) aufgesteckt sind.

7. Rotor nach Anspruch 6, **dadurch gekennzeichnet, dass** die Lüfterflügel (21) von radial innen nach radial außen auf die Ringscheibe (20) aufgesteckt sind.

8. Rotor nach einem der Ansprüche 3 bis 7, **dadurch gekennzeichnet, dass** die Lüfterflügel (21) mit der Ringscheibe (20) verschweißt sind.

9. Rotor einem der Ansprüche 3 bis 8, **dadurch ge- kennzeichnet**, dass die Lüfterflügel (21) axial innere Abschnitte (25) aufweisen, die zwischen der Ringscheibe (20) und der ersten axialen Stirnseite (7) angeordnet sind, und dass die axial inneren Abschnitte (25) unter Druckspannung an der ersten axialen Stirnseite (7) anliegen.

10. Rotor nach einem der obigen Ansprüche, **dadurch gekennzeichnet, dass** auf mindestens einen der Zuganker (11) an der ersten axialen Stirnseite (7) mindestens ein Wuchtgewicht (17) aufgesetzt ist und dass der Lüfter (18) zwischen der ersten axialen Stirnseite (7) und dem Wuchtgewicht (17) angeordnet ist.

11. Rotor nach einem der obigen Ansprüche, **dadurch gekennzeichnet, dass** die Zuganker (11) in den Ausnehmungen (10) mittels einer Vergussmasse (13) vergossen sind.

12. Elektrische Maschine,
- wobei die elektrische Maschine einen Stator (1) aufweist,
- wobei die elektrische Maschine einen Rotor (2) nach einem der obigen Ansprüche aufweist,
- wobei der Rotor (2) in Lagern (5) gelagert ist, so dass er um die Rotationsachse (6) des Rotors (2) rotierbar ist.

13. Elektrische Maschine nach Anspruch 12, **dadurch gekennzeichnet, dass** sie als Traktionsmotor (26) eines Fahrzeugs (27) verwendet wird.

## Claims

1. Rotor of an electric machine,
- wherein the rotor has a rotor laminated core (4) connected to a rotor shaft (3) of the rotor in a rotationally-fixed manner,
- wherein the rotor laminated core (4) extends from a first axial end face (7) of the rotor laminated core (4) to a second axial end face (8) of the rotor laminated core (4) when viewed in the direction of an axis of rotation (6) of the rotor laminated core (4),
- wherein the rotor laminated core (4) has recesses (10) that are distributed around the axis of rotation (6) and extend from the first axial end face (7) to the second axial end face (8) when viewed in the direction of the axis of rotation (6),
- wherein a tie rod (11), which projects beyond the axial end faces (7, 8) when viewed in the direction of the axis of rotation (6), is introduced into each of the recesses (10),
- wherein fastening elements (12) are positioned on the tie rods (11) on both axial end faces (7, 8), so that the rotor sheets (9) of the rotor laminated core (4) are pressed against one another by means of the fastening elements (12) without the arrangement of rotor pressure rings between the end faces (7, 8) of the rotor laminated core (4) and the fastening elements (12),
**characterised in that**
- a fan (18) is positioned on the tie rods (11) on the first axial end face (7) of the rotor laminated core (4), and
- the fastening elements (12) are preferably arranged on the first axial end face (7) of the rotor laminated core (4) between the end face (7) and the fan (18).

2. Rotor according to claim 1, **characterised in that** the rotor laminated core (4) consists of a plurality of rotor sheets (9), that the rotor sheets (9) in each case have a yoke (14) on their side facing away from the axis of rotation (6) and in each case have a sheet hub (15) on their side facing toward the axis of rotation (6) and that the yokes (14) and the sheet hubs (15) of the rotor sheets (9) are connected to one another via respective sheet spokes (16).

3. Rotor according to claim 1 or 2,
c h a r a c t e r i s e d in that the fan (18) has an annular disk (20) running orthogonally to the axis of rotation (6) and fan blades (21) protruding from the annular disk (20).

4. Rotor according to claim 3, **characterised in that** the annular disk (20) has an outer ring (22) on its side facing away from the axis of rotation (6) and a disk hub (23) on its side facing toward the axis of rotation (6), that the fan blades (21) are arranged on the outer ring (22) and that the outer ring (22) and the disk hub (23) are connected to one another via disk spokes (24).

5. Rotor according to claim 4, **characterised in that** the disk hub (23) is connected to the rotor shaft (3) in a manner which is not rotationally fixed.

6. Rotor according to one of claims 3, 4 or 5,
**characterised in that** the fan blades (21) are embodied as sheet parts and are mounted onto the annular disk (20).

7. Rotor according to claim 6, **characterised in that** the fan blades (21) are mounted onto the annular disk (20) from the radial interior to the radial exterior.

8. Rotor according to one of claims 3 to 7,
**characterised in that** the fan blades (21) are welded to the annular disk (20).

9. Rotor according to one of claims 3 to 8, **characterised in that** the fan blades (21) have axially inner sections (25) which are arranged between the annular disk (20) and the first axial end face (7), and that the axially inner sections (25) rest against the first axial end face (7) under compressive stress.

10. Rotor according to one of the preceding claims,
**characterised in that** at least one balancing weight (17) is positioned on at least one of the tie rods (11) on the first axial end face (7) and that the fan (18) is arranged between the first axial end face (7) and the balancing weight (17).

11. Rotor according to one of the preceding claims,
**characterised in that** the tie rods (11) are potted in the recesses (10) by means of a potting compound (13).

12. Electric machine,
- wherein the electric machine has a stator (1),
- wherein the electric machine has a rotor (2) according to one of the preceding claims,
- wherein the rotor (2) is mounted in bearings (5) so that it can be rotated about an axis of rotation (6) of the rotor (2).

13. Electric machine in accordance with claim 12,
**characterised in that** it is used as a traction motor (26) of a vehicle (27).

## Revendications

1. Rotor d'une machine électrique,
- dans lequel le rotor a un paquet (4) de tôles rotoriques solidaire en rotation d'un arbre (3) du rotor,
- dans lequel le paquet (4) de tôles rotoriques s'étend, considéré dans la direction d'un axe (6) de rotation du paquet (4) de tôles rotoriques, d'un premier côté (7) frontal axial du paquet (4) de tôles rotoriques à un deuxième côté (8) frontal axial du paquet (4) de tôles rotoriques,
- dans lequel le paquet (4) de tôles rotoriques a des évidements (10) qui sont répartis autour de l'axe (6) de rotation et qui, considérés dans la direction de l'axe (6) de rotation, s'étendent du premier côté (7) frontal axial au deuxième côté (8) frontal axial,
- dans lequel sont insérés dans les évidements (10) respectivement un tirant (11) qui, considéré dans la direction de l'axe (6) de rotation, dépasse des côtés (7, 8) frontaux axiaux,
- dans lequel des éléments (12) de fixation sont mis sur les tirants (11) aux deux côtés (7, 8) frontaux axiaux de manière à ce que les tôles (9) rotoriques du paquet (4) de tôles rotoriques soient, sans mettre de rondelle de butée entre les côtés (7, 8) frontaux du paquet (4) de tôles rotoriques les éléments (12) de fixation, pressées les unes contre les autres au moyen des éléments (12) de fixation, **caractérisé en ce que**
- du premier côté (7) frontal axial du paquet (4) de tôles rotoriques, un ventilateur (18) est mis sur les tirants (11),
- du premier côté (7) frontal axial du paquet (4) de tôles rotoriques, les éléments (12) de fixation sont mis entre le côté (7) frontal et le ventilateur (18).

2. Rotor suivant la revendication 1, **caractérisé en ce que** le paquet (4) de tôles rotoriques est constitué d'une pluralité de tôles (9) rotoriques, **en ce que** les tôles (9) rotoriques ont de leur côté éloigné de l'axe (6) de rotation respectivement une culasse (14) et de leur côté tourné vers l'axe (6) de rotation respectivement un moyeu (15) de tôle et **en ce que** les culasses (14) et les moyeux (15) de tôle des tôles (9) rotoriques sont reliés entre eux par des rayons (16) de tôle respectifs.

3. Rotor suivant la revendication 1 ou 2, **caractérisé en ce que** le ventilateur a un disque (20) annulaire s'étendant orthogonalement à l'axe (6) de rotation et des pales (21) de ventilateur en saillie du disque (20) annulaire.

4. Rotor suivant la revendication 3, **caractérisé en ce que** le disque (20) annulaire a, du côté éloigné de l'axe (6) de rotation, une bague (22) extérieure, et du côté tourné vers l'axe (6) de rotation, un moyeu (23) de disque **en ce que** les pales (21) du ventilateur sont disposées sur l'anneau (22) extérieur et **en ce que** l'anneau (22) extérieur et le moyeu (23) de disque sont reliés entre eux par des rayons (24) de disque.

5. Rotor suivant la revendication 4, **caractérisé en ce que** le moyeu (23) de disque n'est pas solidaire en rotation de l'arbre (3) du rotor.

6. Rotor suivant l'une des revendications 3, 4 ou 5, **caractérisé en ce que** les pales (21) du ventilateur sont constituées sous la forme de pièces de tôle et sont enfilées sur le disque (20) annulaire.

7. Rotor suivant la revendication 6, **caractérisé en ce que** les pales (21) du ventilateur sont enfilées de l'intérieur radialement à l'extérieur radialement sur le disque (20) annulaire.

8. Rotor suivant l'une des revendications 3 à 7, **caractérisé en ce que** les pales (21) du ventilateur sont soudées au disque (20) annulaire.

9. Rotor suivant l'une des revendications 3 à 8, **caractérisé en ce que** les pales (21) du ventilateur ont des tronçons (25) intérieurs axialement, qui sont disposés entre le disque (20) annulaire et le premier côté (7) frontal axial, et **en ce que** les tronçons (25) intérieurs axialement s'appliquent sous contrainte de pression au premier côté (7) frontal axial.

10. Rotor suivant l'une des revendications précédentes, **caractérisé en ce qu'**au moins une masselotte (17) d'équilibrage est mise sur au moins l'un des tirants (11) au premier côté (7) frontal axial et **en ce que** le ventilateur (18) est disposé entre le premier côté (7) frontal axial et la masselotte (17) d'équilibrage.

11. Rotor suivant l'une des revendications précédentes, **caractérisé en ce que** les tirants (11) sont scellés dans les évidements (10) au moyen d'une composition (13) de scellement.

12. Machine électrique
- la machine électrique ayant un stator (1),
- la machine électrique ayant un rotor (2) suivant l'une des revendications précédentes,
- le rotor étant monté dans des paliers (5) de manière à pouvoir tourner autour de l'axe (6) de rotation du rotor (2).

13. Machine électrique suivant la revendication 12, **caractérisée en ce qu'**elle est utilisée comme moteur (26) de traction d'un véhicule (27).
